# EUROPÄISCHE PATENTANMELDUNG

(11) **EP 1 854 650 A2**
(43) Veröffentlichungstag der Anmeldung: **14.11.2007**
(21) Anmeldenummer: 07107584.0
(22) Anmeldetag: 04.05.2007
(51) Int. Cl.: B60J 7/12

(54) **Hydraulische Betätigungsvorrichtung, insbesondere für ein Cabriolet**

(30) Priorität: 11.05.2006 DE 102006021939
(71) Anmelder: ROBERT BOSCH GMBH, 70442 Stuttgart (DE)
(72) Erfinder: Wehrle, Andreas, 77770 Durbach (DE); Sachs, Michael, 87616 Marktoberdorf (DE)

(57) **Zusammenfassung**

Hydraulische Betätigungsvorrichtung, sowie Verfahren zur Bedienung einer solchen, mit zumindest einem Hydraulikzylinder (2), in dem ein Kolben (3) in einem ersten Stelldruckraum (6) mit einer hydraulischen Kraft beaufschlagbar ist und der Kolben (3) in einem zweiten Stelldruckraum (8) mit einer hydraulischen Kraft beaufschlagbar ist, die der hydraulischen Kraft in dem ersten Stelldruckraum (6) entgegenwirkt, und der erste Stelldruckraum (6) und/oder der zweite Stelldruckraum (8) wahlweise mit einer Druckmittelquelle (19) oder einem Tankvolumen (24) verbindbar ist, wobei zwischen dem ersten und/oder zweiten Stelldruckraum (6, 8) und dem Tankvolumen mindestens ein Rückschlagventil (64, 66, ) angeordnet ist, das beim Ausfall der Druckmittelquelle (19) das Ausströmen des Druckmittels vom ersten oder zweiten Stelldruckraum (6,8) in das Tankvolumen (24) verhindert und den Kolben (3) blockiert.

## Beschreibung

Die Erfindung betrifft eine hydraulische Betätigungsvorrichtung mit zumindest einem Hydraulikzylinder.

Hydraulische Betätigungsvorrichtungen werden in der Automobilindustrie eingesetzt, um beispielsweise Kofferraumdeckel, automatisch ausfahrende Spoiler oder Verdecke von Cabriolets zu betätigen. Eine Betätigungsvorrichtung für ein Verdeck von einem Cabriolet ist aus der DE 102 19 513 A1 bekannt. Bei der dort vorgeschlagenen Betätigungsvorrichtung sind zwei doppelseitig wirkende Hydraulikzylinder miteinander gekoppelt. Die Koppelung wird in Form einer Serienschaltung durchgeführt, so dass die Wege, die die Kolben in den beiden Hydraulikzylindern zurücklegen in einem festen Verhältnis zueinander stehen. Zur Betätigung wird jeweils einer der beiden Arbeitsdruckräume der Hydraulikzylinder mit einem 3/2-Wegeventil verbunden. Über das 3/2-Wegeventil wird der Arbeitsdruckraum des Hydraulikzylinders entweder mit einer Druckmittelquelle oder mit einem Tankvolumen verbunden.

Die vorgeschlagene Betätigungsvorrichtung hat den Nachteil, dass aufgrund der Verwendung von 3/2-Wegeventilen eine hydraulische Abschaltung bzw. ein Blockieren der Hydraulikzylinder in einer bestimmten Position, nur über eine spezielles Schalten der Ventile möglich ist, bei der der entsprechende Arbeitsdruckraum von der Druckmittelquelle über ein Rückschlagventil mit einem Druck beaufschlagt wird. Fällt bei einer solchen Schaltungsanordnung während des Verstellbetriebs die Pumpe, bzw. der Versorgungsstrom aus, befindet sich das zu verstellende Verdeck in einem unkontrollierten Zustand, wodurch die Gefahr einer Beschädigung oder eine Verletzungsgefahr für die Insassen entsteht.

Das erfindungsgemäße Verfahren und die erfindungsgemäße hydraulische Betätigungsvorrichtung mit den Merkmalen der unabhängigen Ansprüche haben den Vorteil, dass durch die erfindungsgemäße Schaltungsanordnung bei einem Abfall des Förderdrucks der Druckmittelquelle unter einen bestimmten Wert die hydraulischen Betätigungselemente, und damit die zu verstellenden Kraftfahrzeug-Teile, umgehend in ihrer momentanen Lage verriegelt werden. Um die beweglichen Teile dann anschließend in eine gesicherte Position zu verstellen, kann in einem manuellen Notbetrieb die Verriegelung der hydraulischen Betätigungselemente entriegelt werden und beispielsweise das Cabrio-Verdeck von Hand geöffnet oder geschlossen werden. Ein solcher manueller Notbetrieb ist auch in stromlosem Zustand des Fahrzeugs möglich. Eine solche Verriegelung mit anschließendem manuellen Notbetrieb ist auch beim Ausfall des elektrischen Versorgungssystems möglich, bei dem die Schaltventile für die Hydraulikzylinder automatisch in ihre Ruhestellung fallen.

Durch die in den Unteransprüchen ausgeführten Merkmale sind vorteilhafte Weiterbildungen des Verfahrens und der Vorrichtung der unabhängigen Ansprüchen möglich. So kann beispielsweise die Verriegelung der hydraulischen Betätigungssysteme dadurch aufgehoben werden, dass im Notbetrieb eine zusätzliche Verstellkraft aufgebracht wird, die den Kolben beispielsweise gegen den Druck eines Überdruckventils verschiebt.

In einer weiteren Ausführung ist im hydraulischen Betätigungssystem ein manuell betätigbares Entsperrventil angeordnet, mit dem der Druck im Bestätigungssystem mit dem Tankvolumen ausgeglichen werden kann. Dadurch kann das zu verstellende Teil praktisch "drucklos" ohne zusätzliche Verstellkraft bewegt werden. Beispielsweise kann dabei ein zu verstellendes Teil durch sein Eigengewicht an eine bestimmte Position bewegt werden.

Um das hydraulische Betätigungssystem an verschiedene Verstellanwendungen anzupassen, kann der Druck, gegen den das zu verstellende Teil im Notbetrieb verstellt werden muss, fest oder einstellbar vorgegeben werden. Dies kann z.B. durch die Wahl des Überdruckventils oder des Entsperrventils realisiert werden.

Bei der erfindungsgemäßen hydraulischen Betätigungsvorrichtung sind die Ventile zur Befüllung und Entleerung der beiden Stelldruckräume immer derart geschaltet, dass zwischen dem zu entleerenden Stelldruckraum und dem Tankvolumen ein Rückschlagventil angeordnet ist. Fällt nun während des Befüllvorgangs die Druckmittelquelle aus, verhindert das Rückschlagventil ein weiteres Entweichen von Druckmittel aus dem zu entleerenden Stelldruckraum. Dadurch ist eine zuverlässige Notverriegelung des zu verstellenden Teils geschaffen, die eine unkontrollierte Bewegung des zu verstellenden Teils beim Ausfall der Förderpumpe verhindert.

Sind des weiteren parallel zu dem Rückstellventil zusätzlich ein Druckbegrenzungsventil und ein manuell betätigbares Entsperrventil angeordnet, kann durch deren Einstellung die aufzubringende Entriegelungskraft und die anschließende manuelle Betätigungskraft im Notbetrieb vorgegeben werden.

Beispielsweise kann die Druckschwelle des Überdruckventils mittels eines Federelements vorgegeben werden, dessen Federkraft überwunden werden muss, um Druckmittel durch das Druckbegrenzungsventil in das Tankvolumen zu drücken.

Sind in den beiden Verbindungsleitungen der beiden Stelldruckräume zum Tankvolumen jeweils ein Überdruckventil und ein Rückschlagventil angeordnet, kann das Rückschlagventil des einen Zweiges im Notbetätigungsbetrieb (Betätigung des Überdruckventils im anderen Zweig) die Funktion eines Nachsaugventils übernehmen, um Druckmittel aus dem Tankvolumen in den entsprechenden Stelldruckraum zu saugen und damit eine Vakuumbildung verhindern.

Die erfindungsgemäße hydraulische Betätigungsvorrichtung hat den Vorteil, dass die beiden Funktionen Bedrücken des Stelldruckraums und Entspannen des Stelldruckraums voneinander entkoppelt über zwei separate Ventile durchgeführt werden. Damit kann für das erste Ventil und das zweite Ventil jeweils ein einfaches Ventil eingesetzt werden, welches beispielsweise auch in anderen Systemen einsetzbar ist und in hoher Stückzahl produziert wird. Durch die Verwendung solcher einfachen Ventile, über die eine Trennung der Funktion Verbinden des Tankvolumens mit dem Stelldruckraum und Verbinden der Druckmittelquelle mit dem Stelldruckraum möglich ist, ist eine erhebliche Kosteneinsparung möglich. Gemäß einer bevorzugten Ausführungsform ist die hydraulische Betätigungsvorrichtung in zwei entgegen gesetzten Richtungen mit einer hydraulischen Kraft beaufschlagbar. Hierzu ist in dem Hydraulikzylinder neben dem ersten Stelldruckraum ein zweiter Stelldruckraum vorgesehen, so dass der die beiden Stelldruckräume voneinander trennende Kolben in beiden Richtungen mit einer hydraulischen Kraft beaufschlagbar ist. Dabei ist der zweite Stelldruckraum über ein drittes Ventil mit einem Tankvolumen bzw. über ein viertes Ventil mit einer Druckmittelquelle verbindbar.

In einer alternativen Ausführung ist jeweils zwischen dem ersten und zweiten Ventil und dem ersten Stelldruckraum, und zwischen dem dritten und vierten Ventil und dem zweiten Stelldruckraum jeweils ein hydraulisches Rückschlagventil angeordnet, das über eine hydraulische Steuerleitung mit dem dem Betätigungselement abgewandten Ausgang des jeweils gegenüber liegenden hydraulischen Rückschlagventils verbunden ist. Eine solche hydraulische Kopplung der beiden Rückstellventile bewirkt eine sofortige Verriegelung des Kolbens, sobald bei einem Verstellvorgang der Druck der Druckmittelquelle unter einen bestimmten Wert abfällt. Dadurch kann mit sehr einfachen Mitteln eine Wirkungsvolle Sperrung des zu verstellenden Teils, beispielsweise bei einem Stromausfall, erzielt werden.

In einem weiteren Ausführungsbeispiel weisen der erste und der zweite Stelldruckraum des Zylinders eine gemeinsame Rückflussleitung zum Tankvolumen auf, so dass für beide Stelldruckräume zusammen nur ein Rückschlagventil bzw. Überdruckventil bzw. manuelles Entsperrventil notwendig ist. Hierbei kann insbesondere bei der Verwendung mehrerer Zylinder die Anzahl der benötigten Notbetätigungs-Ventile reduziert werden.

Besonders vorteilhaft ist es, sämtliche Ventile als 2/2-Wegeventile auszuführen, die zwischen zwei Schaltpositionen umgeschaltet werden können, wobei in jeweils einer Schaltposition der Durchfluss gesperrt und in der anderen Schaltposition der Durchfluss freigegeben ist. Dadurch können sowohl für den ersten Stelldruckraum als auch für den zweiten Stelldruckraum die Ventile in eine den Durchfluss sperrende Schaltposition gebracht werden. Damit ist der Kolben hydraulisch fixiert. Zusätzlich sind das erste und dritte Ventil oder das zweite und vierte Ventil als Proportionalventil ausgebildet, um den Verstellvorgang geschwindigkeitsabhängig zu steuern. Dabei können die entsprechenden Elektromagneten individuell unabhängig voneinander angesteuert werden.

Gemäß einer weiteren bevorzugten Ausführungsform werden die beiden jeweils dem ersten Stelldruckraum oder dem zweiten Stelldruckraum zugeordneten Ventile durch jeweils eine Feder in entgegengesetzten Schaltpositionen gehalten. Damit wird z. B. eine Verbindung zwischen der Druckmittelquelle und dem ersten Stelldruckraum hergestellt, während eine Verbindung von dem ersten Stelldruckraum zu dem Tankvolumen hin gesperrt ist, ohne dass mittels einer Steuerungsvorrichtung eines der Ventile betätigt werden muss. Dieser Schaltzustand wird dann beispielsweise auch bei einer Unterbrechung der Stromversorgung eingenommen, um eine Verbindung vom Stelldruckraum zu dem parallel geschalteten Rückstellventil und dem Überdruckventil für den Notbetrieb herzustellen. Besonders vorteilhaft ist es, wenn die beiden Ventile, die dem zweiten Stelldruckraum zugeordnet sind, entsprechend mit jeweils einer Feder in ihrer Ruheposition gehalten werden.

Besonders vorteilhaft ist es außerdem, als Druckmittelquelle eine elektromotorisch angetriebene Pumpe einzusetzen. Soll z. B. die Bewegungsgeschwindigkeit des Kolbens variiert werden, wird die Leistung der Pumpe durch eine Bedarfssteuerung angepasst. Als Option kann auch in einfacher Weise die Drehzahl einer elektromotorisch angetriebenen Konstantpumpe - beispielsweise eine Außenzahnradpumpe - eingestellt werden, indem die Drehzahl des antreibenden Elektromotors verändert wird und so die Bewegungsgeschwindigkeit variiert wird.

Ausführungsbeispiele der erfindungsgemäßen hydraulischen Betätigungsvorrichtung sind in der Zeichnung dargestellt und in der Beschreibung detailliert erläutert. Es zeigen:
- Fig. 1: einen hydraulischen Schaltplan einer erfindungsgemäßen hydraulischen Betätigungsvorrichtung, und
- Fig.2: eine Ausführungsvarianten der hydraulischen Betätigungsvorrichtung gemäß Fig. 1.

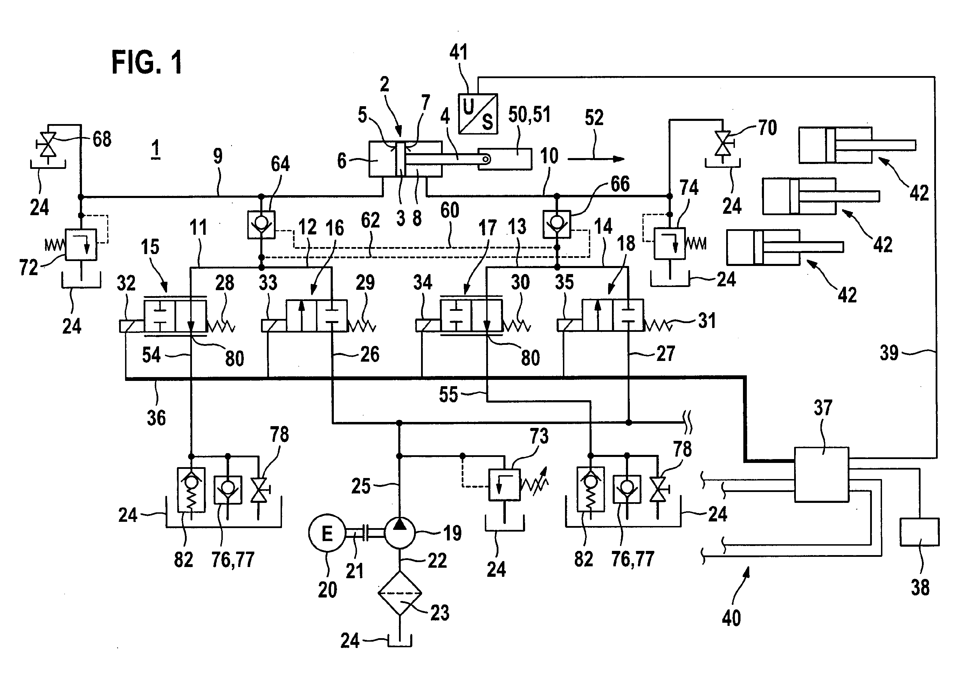

Die in der Fig. 1 dargestellte hydraulische Betätigungsvorrichtung 1 umfasst als hydraulisches Betätigungselement einen Hydraulikzylinder 2, in dem ein Kolben 3 längs verschiebbar angeordnet ist. Um die Bewegung des Kolbens 3 auf eine zu betätigende Klappe oder beispielsweise ein Verdeck 50 eines Cabriolets zu übertragen, ist der Kolben 3 über eine Kolbenstange 4 mit dem zu verstellenden Teil 51 im Kraftfahrzeug, insbesondere einem Cabriolet-Verdeck 50, verbunden. Der Kolben 3 weist eine erste Kolbenfläche 5 auf, die einen ersten Stelldruckraum 6 in dem Hydraulikzylinder 2 begrenzt. Auf der von der ersten Kolbenfläche 5 abgewandten Seite ist an dem Kolben 3 eine zweite Kolbenfläche 7 ausgebildet, die entsprechend einen zweiten Stelldruckraum 8 in dem Hydraulikzylinder 2 begrenzt. In Abhängigkeit von der auf den Kolben 3 wirkenden resultierenden hydraulischen Kraft wird der Kolben 3 in dem Hydraulikzylinder 2 in axialer Richtung 52 verschoben. Zum Erzeugen der hydraulischen Kraft auf den Kolben 3 ist über eine erste Stelldruckleitung 9 der Druck in dem ersten Stelldruckraum 6 und über eine zweite Stelldruckleitung 10 der Druck in dem zweiten Stelldruckraum 8 veränderbar. Die erste Stelldruckleitung 9 verzweigt sich in einen ersten Leitungszweig 11 und einen zweiten Leitungszweig 12. Die zweite Stelldruckleitung 10 verzweigt sich in einen dritten Leitungszweig 13 sowie einen vierten Leitungszweig 14. Über den ersten Leitungszweig 11 ist der erste Stelldruckraum 6 mit einem ersten Ventil 15 verbunden. Über den zweiten Leitungszweig 12 ist der erste Stelldruckraum 6 mit einem zweiten Ventil 16 verbunden. Dementsprechend ist der zweite Stelldruckraum 8 über einen dritten Leitungszweig 13 mit einem dritten Ventil 17 und über den vierten Leitungszweig 14 mit einem vierten Ventil 18 verbunden. Der erste Stelldruckraum 6 und der zweite Stelldruckraum 8 sind über das zweite Ventil 16 bzw. das vierte Ventil 18 mit einer Druckmittelquelle 19 verbindbar. Als Druckmittelquelle 19 dient im dargestellten Ausführungsbeispiel eine Hydropumpe 19, die vorzugsweise als Konstantpumpe ausgeführt ist. Die Hydropumpe 19 ist zur Förderung in lediglich einer Richtung vorgesehen und wird von einem Elektromotor 20 angetrieben, der mit der Hydropumpe 19 über eine Welle 21 verbunden ist. Die Hydropumpe 19 saugt Druckmittel über eine Saugleitung 22 und einen darin angeordneten Filter 23 aus einem Tankvolumen 24 an. Das von der Hydropumpe 19 angesaugte Druckmittel wird von der Hydropumpe 19 in eine Arbeitsdruckleitung 25 gefördert. Die Arbeitsdruckleitung 25 verzweigt sich in einen ersten Arbeitsdruckleitungszweig 26 und einen zweiten Arbeitsdruckleitungszweig 27. Der erste Arbeitsdruckleitungszweig 26 ist mit dem zweiten Ventil 16 verbunden. Der zweite Arbeitsdruckleitungszweig 27 ist mit dem vierten Ventil 18 verbunden. Über das zweite Ventil 16 kann eine durchströmbare Verbindung zwischen dem ersten Arbeitsdruckleitungszweig 26 und dem zweiten Leitungszweig 12 hergestellt werden, so dass das von der Hydropumpe 19 in die Arbeitsdruckleitung 25 geförderte Druckmittel über den ersten Arbeitsdruckleitungszweig 26, den zweiten Leitungszweig 12 sowie die erste Stelldruckleitung 9 in den ersten Stelldruckraum 6 strömt und dort die erste Kolbenfläche 5 mit einer hydraulischen Kraft beaufschlagt. Ebenso kann durch das vierte Ventil 18 der zweite Arbeitsdruckleitungszweig 27 mit dem vierten Leitungszweig 14 durchströmbar verbunden werden. Das von der Hydropumpe 19 in die Arbeitsdruckleitung 25 geförderte Druckmittel strömt dann über den zweiten Arbeitsdruckleitungszweig 27, den vierten Leitungszweig 14 sowie die zweite Stelldruckleitung 10 in den zweiten Stelldruckraum 8. Dort wird die zweite Kolbenfläche 7 mit einer hydraulischen Kraft beaufschlagt. Bei dem in der Fig. 1 dargestellten Ausführungsbeispiel sind die erste Kolbenfläche 5 und die zweite Kolbenfläche 7 unterschiedlich groß. Werden daher die erste Kolbenfläche 5 und die zweite Kolbenfläche 7 beide mit dem von der Hydropumpe 19 erzeugten Druck beaufschlagt, so bewegt sich der Kolben 3 samt der Kolbenstange 4 in Fig. 1 in Ausfahrrichtung 52 nach rechts und verringert damit das Volumen des zweiten Stelldruckraums 8.

Der erste Stelldruckraum 6 und der zweite Stelldruckraum 8 sind über das erste Ventil 15 bzw. das dritte Ventil 17 zu dem Tankvolumen 24 hin entspannbar. Hierzu ist durch das erste Ventil 15 eine durchströmbare Verbindung von dem ersten Leitungszweig 11 in das Tankvolumen 24 herstellbar. Damit wird bei einer entsprechenden Schaltstellung des ersten Ventils 15 der erste Stelldruckraum 6 über die erste Stelldruckleitung 9 und den ersten Leitungszweig 11 in das Tankvolumen 24 entspannt. Befindet sich das dritte Ventil 17 in einer entsprechenden Schaltposition, so wird der dritte Leitungszweig 13 mit dem Tankvolumen 24 verbunden und der zweite Stelldruckraum 8 über die zweite Stelldruckleitung 10, sowie den dritten Leitungszweig 13 in das Tankvolumen 24 entspannt. Die Ventile 15-18 sind bevorzugt 2/2-Wegeventile, die jeweils durch eine Feder belastet in ihrer Ruheposition gehalten werden. Das erste Ventil 15 wird durch eine erste Feder 28 in einer Position gehalten, in der eine durchströmbare Verbindung von dem ersten Leitungszweig 11 zu dem Tankvolumen 24 besteht. In entgegen gesetzter Richtung wird das erste Ventil 15 durch die Kraft eines Elektromagneten 32 beaufschlagt, der bei entsprechender Bestromung das erste Ventil 15 in eine erste Schaltposition bringt, in der der Durchfluss gesperrt ist. In dieser ersten Schaltposition des ersten Ventils 15 ist damit ein Entspannen des ersten Stelldruckraums 6 über den ersten Leitungszweig 11 in das Tankvolumen 24 nicht möglich. Wird der erste Elektromagnet 32 nicht bestromt, so bringt die erste Feder 28 das erste Ventil 15 zurück in seine zweite Schaltposition, in der der erste Stelldruckraum 6 in das Tankvolumen 24 entspannt wird.

Anders als das erste Ventil 15 wird das zweite Ventil 16, das parallel zu dem ersten Ventil 15 angeordnet ist, durch die Kraft einer zweiten Feder 29 in Richtung der ersten Schaltposition als Ruheposition beaufschlagt. So lange ein in entgegen gesetzter Richtung wirkender zweiter Elektromagnet 32 nicht bestromt ist, ist damit keine durchströmbare Verbindung zwischen dem ersten Arbeitsdruckleitungszweig 26, sowie dem zweiten Leitungszweig 12 hergestellt. Erst wenn der zweite Elektromagnet 33 bestromt wird, wird das zweite Ventil 16 in Richtung seiner zweiten Schaltstellung betätigt, in der Druckmittel aus dem ersten Arbeitsdruckleitungszweig 26 in den zweiten Leitungszweig 12 strömen kann. In dieser zweiten Schaltposition des zweiten Ventils 16 wird Druckmittel von der Hydropumpe 19 in den ersten Stelldruckraum 6 gefördert. Das dritte Ventil 17 entspricht in seinem Aufbau dem ersten Ventil 15, wobei es durch eine dritte Feder 30 in seiner zweiten Schaltstellung gehalten wird, in der der zweite Stelldruckraum 8 in Richtung des Tankvolumens 24 entspannt wird. Entgegen der Kraft der dritten Feder 30 wirkt ebenfalls ein Elektromagnet 34, der das dritte Ventil 17 mit einer Kraft in Richtung der ersten Schaltstellung beaufschlagt. Schließlich ist auch das vierte Ventil 18 mit einer vierten Feder 31 beaufschlagt, die es in seiner Ruheposition hält. Die Ruheposition des vierten Ventils 18 ist wie bei dem zweiten Ventil 16 die erste Schaltposition des Ventils, in der der Durchfluss gesperrt ist. Entgegen der Kraft der vierten Feder 31 ist an dem vierten Ventil 18 ein vierter Elektromagnet 35 angeordnet, der bei einem entsprechenden anliegenden Signal das vierte Ventil 18 in seine zweite Schaltposition bringt. In der zweiten Schaltposition des vierten Ventils 18 wird durch die Hydropumpe 19 der zweite Stelldruckraum 8 bedrückt. Die vier Elektromagneten 32-35 zur Betätigung der Ventile 15-18 werden über eine elektrische Leitung 36 angesteuert. Die elektrische Leitung 36 kann z. B. ein Teil eines Bussystems sein, über das die Elektromagneten 32-35 individuell und unabhängig voneinander angesteuert werden können. Die elektrische Leitung 36 ist mit einem Steuergerät 37 verbunden. Über das Steuergerät 37 werden die Schaltpositionen der Elektromagneten 32-35 definiert und dementsprechend ein jedem Elektromagneten 32-35 individuell bemessener Strom zugeführt.

Um z. B. den Öffnungs- oder Schließvorgang des Verdecks 50 eines Cabriolets zu starten, wird dem Steuergerät 37 durch einen Betätigungsschalter 38 ein entsprechendes Startsignal übermittelt. Um das Ende eines Stellvorgangs erkennen zu können, ist mit einem Eingang des Steuergeräts 37 eine Signalleitung 39 verbunden, über die dem Steuergerät 37 ein Spannungssignal eines Wegmessers 41 zugeführt wird. Durch den Wegmesser 41 kann die jeweilige Position der Kolbenstange 4 erfasst werden, so dass beispielsweise gegen Ende einer Stellbewegung der Volumenstrom des Druckmittels reduziert werden kann. Durch die regelbaren Ventile 15-18 wird von der als Konstantpumpe ausgeführten Hydropumpe 19 eine kleinerer Volumenstrom in die Arbeitsdruckleitung 25 gefördert. Die Stellbewegung verlangsamt sich daher. Über Ein- /Ausgänge 40 kommuniziert das Steuergerät 37 mit anderen Baugruppen des Fahrzeugs. Einer dieser Ausgänge kann z. B. die Drehzahl des Elektromotors 20 steuern. Es ist für den Fachmann selbstverständlich, dass sich die beschriebene Betätigungsvorrichtung 1 nicht auf die Anwendung mit lediglich einem Hydraulikzylinder 2 beschränkt. Vielmehr ist eine Anwendung zusammen mit mehreren Hydraulikzylindern 42 möglich. Sind die weiteren Hydraulikzylinder 42 jeweils wiederum als doppelt wirkende Hydraulikzylinder 42 ausgeführt, so ist jedem der so entstehenden Stelldruckräume der weiteren Hydraulikzylinder 42 ein Paar von Ventilen zugeordnet, wie dies für den Hydraulikzylinder 2 in der Fig. 1 dargestellt ist.

In Figur 1 ist das erste Ventil 15 und das dritte Ventil 17 als Proportionalventil ausgebildet, deren Druckmittel-Durchlassstrom über die Steuereinheit 37 variabel einstellbar ist. Die Ruheposition des ersten und des dritten Ventils 15, 17 stellt hierbei eine offene, durchströmbare Verbindung zwischen dem Stellraum 6 und dem Tankvolumen 24 dar, so dass bei einem unbestromten Ventil 15, 17 die Stelldruckräume 6, 8 auf gleichem Druckniveau mit dem Tankvolumen 24 liegen. Der Ausgang 80 des ersten und dritten Ventils 15, 17 ist dabei jeweils durch eine separate Leitung 54, 55 direkt mit dem Tankvolumen 24 verbunden. Das zweite Ventil 16 und das vierte Ventil 18 sind jeweils als Schaltventile ausgebildet, die einen sperrenden Zustand und einen durchlassenden Zustand aufweisen. Dabei ist der sperrende Zustand als Ruheposition ausgebildet, so dass bei einem Stromausfall die Verbindung zwischen der Druckmittelquelle 19 und den Stelldruckräumen 6, 8 unterbrochen ist. Die in Figur 1 dargestellte Anordnung mit zwei Proportionalventilen 15, 17, die jeweils mit dem Tankvolumen 24 verbunden sind, und zwei Schaltventilen 16, 18, die mit der Druckmittelquelle 19 verbunden sind, ist besonders vorteilhaft mit 2/2-Wegeventile 15 bis 18 realisierbar, da hierbei alle vier 2/2-Wegeventile 15-18, - bzw. gegebenenfalls weitere Vierereinheiten von 2/2-Wegeventile für zusätzliche Zylinder 42 - günstig in einem gemeinsamen Ventilblock herstellbar sind.

Bei der gewählten Ausführung, bei der das erste Ventil 15 und das dritte Ventil 17 als Ruheposition in ihrer zweiten Schaltposition gehalten werden und das zweite Ventil 16 und das vierte Ventil 18 gleichzeitig durch die entsprechenden Federn in ihrer ersten Schaltposition gehalten werden, wird erreicht, dass der Druck in dem ersten Stelldruckraum 6 und in dem zweiten Stelldruckraum 8 dem Druckniveau des Tankvolumens 24 entspricht. Der Hydraulikzylinder 2 ist damit drucklos, bzw. gegenüber dem Tankvolumen 24 ausgeglichen. Es ist jedoch ebenso denkbar, die jeweils andere Schaltposition der Ventile 15-18 als Ruheposition zu wählen. Wichtig ist dabei lediglich, dass die paarweise einer Stelldruckkammer 6, 8 zugeordneten Ventile 15, 16 bzw. 17, 18 als Ruheposition jeweils unterschiedliche Schaltpositionen aufweisen. Vorzugsweise stimmen die Schaltpositionen des ersten und zweiten Ventils 15, 16 und des dritten und vierten Ventils 17, 18 paarweise überein, so dass die Ruheposition des ersten Ventils 15 der Ruheposition des dritten Ventils 17 und die Ruheposition des zweiten Ventils 16 der Ruheposition des vierten Ventils 18 entspricht.

Fällt nun beim Verstellen des beweglichen Teils 51, beispielsweise des Cabrioverdecks 50, die Versorgungsenergie aus, soll einerseits gewährleistet sein, dass das bewegliche Teil 51 in seiner augenblicklichen Lage verharrt und anschließend in einem manuellen Notbetrieb in eine gesicherte Position verstellt werden kann. Hierzu sind in dem hydraulischen Betätigungssystem 1 der Figur 1 Notbetriebssysteme dargestellt, die alternativ oder in Kombination angewendet werden können. In einer ersten Ausführung ist in der ersten Stelldruckleitung 9 ein hydraulisch angesteuertes Rückschlagventil 64 und in der zweiten Stelldruckleitung 10 ein zweites hydraulisches Rückschlagventil 66 angeordnet. Das hydraulische Rückschlagventil 64 wird von einer Hydraulikleitung 60 angesteuert, die zwischen dem zweiten hydraulischen Rückschlagventil 66 und der Druckmittelquelle 19 abzweigt. In gleicher Weise wird das hydraulische Rückschlagventil 66 über eine zweite hydraulische Steuerleitung 62 angesteuert, die zwischen dem ersten hydraulischen Rückschlagventil 64 und der Druckmittelquelle 19 abzweigt. Durch diese Kombination der hydraulischen Rückschlagventile 64, 66 ist gewährleistet, dass beim Anliegen eines Drucks von der Druckmittelquelle 19 am ersten Stelldruckraum 6 oder am zweiten Stelldruckraum 8 jeweils Druckmittel in den Zylinder 2 hinein- bzw. abfließen kann. Liegt jedoch von der Druckmittelquelle 19 her kein ausreichender Druck mehr an, bewirken die hydraulischen Steuerleitungen 60, 62 eine Sperrung der hydraulischen Rückschlagventile 64, 66, so dass bei einem Ausfall der Druckmittelquelle 19 ein Zu- oder Abströmen des Druckmittels in den Hydraulikzylinder 2 unterbunden wird. Dadurch ist eine Notverriegelung geschaffen, sodass die Zylinderstange 4 und damit das bewegliche Teil 51 bei Ausfall der Druckmittelquelle 19 in seiner Momentanstellung verharrt. Soll nun beispielsweise trotz Ausfall der Druckmittelquelle 19 das Cabriolet-Verdeck 50 vollständig geschlossen oder geöffnet werden, sind für eine manuelle Notentriegelung die Überdruckventile 72 und 74 jeweils zwischen dem hydraulischen Rückschlagventil 64 und dem ersten Stelldruckraum 6 und zwischen dem zweiten hydraulischen Rückschlagventil 66 und dem zweiten Stelldruckraum 8 angeordnet. Dabei ist die Druckschwelle für die Überdruckventile 72, 74 derart einstellbar, dass beispielsweise durch eine manuell aufbringbare Betätigungskraft die Notverriegelung durch die hydraulischen Rückschlagventile 64, 66 überwunden werden kann, indem Druckmittel über die Überdruckventile 72 oder 74 in das Tankvolumen 24 gedrückt wird. Dabei muss im Zylinder 2 manuell ein so hoher Druck erzeugt werden, dass die eingestellte Druckschwelle der Überdruckventile 72, 74 überwunden wird.

In einer weiteren Variante des Notbetriebssystems ist parallel zum Überdruckventil 72 und/oder parallel zum Überdruckventil 74 ein mechanisches Entsperrventil 68 bzw. 70 angeordnet. Wird bei einer Notverstellung das mechanische Entsperrventil 68 bzw. 70 von Hand geöffnet, kann das Überdruckventil 72 bzw. 74 umgangen werden, so dass der Kolben 3 praktisch ohne Gegendruck des hydraulischen Betätigungssystems 1 manuell verstellt werden kann. Durch die manuelle Betätigung der mechanischen Entsperrventile 68 bzw. 70 ist dabei gewährleistet, dass bei einer eventuellen Verstellung aufgrund der Schwerkraft des zu verstellenden Teils 51 keine Gefahrensituation auftritt.

In einer weiteren Ausführung eines Notverstellsystems ist zwischen dem Ausgang 80 des ersten Ventils 15 und/oder des zweiten Ventils 17 ein Rückschlagventil 76 zum Tankvolumen 24 hin angeordnet. Da bei einem eventuellen Stromausfall das Ventil 15, 17 sich jeweils in der Ruheposition mit durchströmbarer Öffnung befindet, verhindern nun die Rückschlagventile 76 das Ausströmen von Druckmittel aus dem Stelldruckraum 6 über das Ventil 15 in das Tankvolumen 24 bzw. das Ausströmen des Druckmittels aus dem Stelldruckraum 8 über das dritte Ventil 17 in das Tankvolumen 24. Dadurch ist bei einem eventuellen Stromausfall ebenfalls eine Notverriegelung geschaffen, die das zu verstellende Teil 51 in seiner augenblicklichen Position fixiert. Soll nun im stromlosen Zustand mittels einer manuellen Notbetätigung das zu verstellende Teil 51 in eine gesicherte Position verstellt werden, kann durch das Aufbringen einer bestimmten manuellen Verstellkraft Druckmittel über ein parallel zum Rückschlagventil 76 angeordnetes Überdruckventil 82 in das Tankvolumen 24 gepresst werden. Sind an beiden Ausgangsleitungen 54, 55 der beiden Ventile 15, 17 Rückschlagventile 76 und Überdruckventile 82 angeordnet, kann im manuellen Notbetrieb beispielsweise beim Entleeren des ersten Stelldruckraums 6 gleichzeitig Druckmittel über das dritte Ventil 17 über das Rückschlagventil 76 angesaugt werden, da es bei dieser Verstellrichtung (entgegen Pfeil 52) als Nachsaugventil 77 dient. Dadurch wird vermieden, dass im Stelldruckraum 8 ein Vakuum entsteht.

In einer weiteren Modifikation ist parallel zu den Rückschlagventilen 76 und den Überdruckventilen 82 wiederum ein mechanischen Entsperrventil 78 angeordnet, was für einen Notbetrieb manuell geöffnet werden kann. Dadurch kann die Verriegelung aufgrund der Rückschlagventile 76 aufgehoben werden und der Kolben 3 praktisch drucklos verstellt werden, wobei das Druckmittel über einen der beiden mechanischen Entsperrventile 78 in das Tankvolumen 24 strömt. Dabei kann gleichzeitig wiederum über die andere Ausgangsleitung 54 bzw. 55 Druckmittel über das als Nachsaugventil 77 dienende Rückschlagventil 76 angesaugt werden.

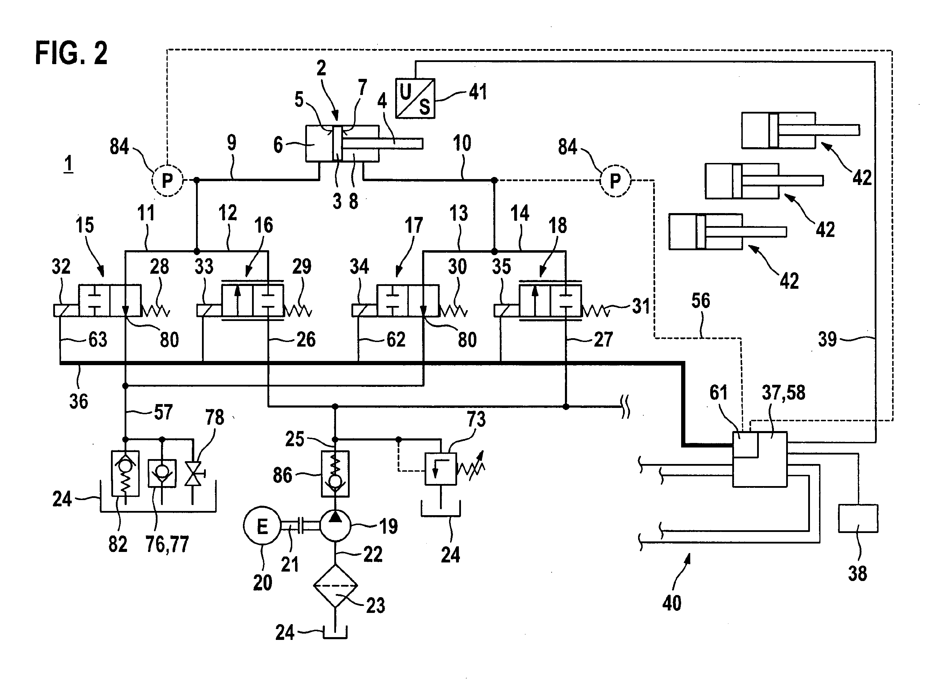

Figur 2 zeigt eine Variante der hydraulischen Schaltung gemäß Figur 1, bei der das zweite Ventil 16 und das vierte Ventil 18 als Proportionalventile und das erste Ventil 15 und das dritte Ventil als Schaltventile ausgebildet sind. Hierbei wird die Verstellgeschwindigkeit der Kolbenstange 4 nicht über den Abfluss des Druckmittels aus den Stelldruckräumen 6 und 8 gesteuert, wie dies in der Schaltung gemäß Figur 2 der Fall ist, sondern über die Zufuhr des Druckmittels von der Druckmittelquelle 19 über die Proportionalventile 16, 18 in die Stelldruckräume 6, 8 hinein. Hierbei kann wiederum unabhängig vom Volumenstrom der Druckmittelquelle 19 der Zufluss des Druckmittels in den Stelldruckraum 6 oder 8 über die variable Durchflusssteuerung der Proportionalventile 16 bzw. 18 gesteuert werden. Hierzu wird beispielsweise das Proportionalventil 16 aus seiner gesperrten Ruhestellung in eine zumindest teilweise geöffnete Schaltstellung überführt, wodurch der Stelldruckraum 6 mittels eines einstellbaren Volumenstroms befüllt, und somit die Kolbenstange 4 nach rechts in Ausfahrrichtung 52 bewegt wird. Dabei ist der Stelldruckraum 8 über das Schaltventil 17 direkt unmittelbar mit dem Volumentank 24 verbunden, so dass die Verstellgeschwindigkeit der Kolbenstange 4 durch die Zufuhr des Druckmittels in den Stelldruckraum 6 gesteuert wird. In dem hydraulischen Betätigungssystem 1 der Fig. 2 sind die beiden Ausgänge 80 des ersten Ventils 15 und des dritten Ventils 17 zu einer gemeinsamen Rückflussleitung 57 zusammengefasst, die mit dem Tankvolumen 24 verbunden ist. Dabei ist die Notbetriebsvorrichtung in die gemeinsame Rückflussleitung 57 integriert. Entsprechend den separaten Rückführungsleitungen 54, 55 in Figur 1 ist hier in der gemeinsamen Rückführungsleitung 57 wiederum das Überdruckventil 82 und das Rückschlagventil 76 und das mechanische Entsperrventil 78 parallel zueinander angeordnet, wobei jedes der drei Ventile 82, 76, 78 mit dem Volumentank 24 verbunden ist. Das Wirkprinzip der manuellen Notbetätigung ist hierbei gleich, wie in Figur 1 beschrieben, wobei bei dieser Schaltungsanordnung die beiden Stelldruckräume 6 und 8 nicht mehr unabhängig voneinander mit Druck beaufschlagt werden können. Andererseits können bei diesem Schaltungsaufbau gegenüber der Figur 1 ein Satz von Ventilen 82, 76, 68 eingespart werden.

Anstelle des einen Kolbens 3 können in der dargestellten Schaltung gleichzeitig auch mehrere Kolben 42 angesteuert werden oder mehrere Schaltungen für mehrere Kolben 42 nebeneinander aufgebaut werden. Die in Figur 1 und 2 dargestellten Schaltungen können besonders vorteilhaft für die Verstellung des Cabrio-Verdecks 50 verwendet werden, bei dem die einzelnen zueinander beweglich angeordneten Verdeckteile 50 jeweils mit einer Kolbenstange 4 verbunden sind, um diese automatisch zu verstellen. In einer weiteren Anwendung der hydraulischen Schaltung 1 können insbesondere auch dreh- oder kippbare Teile am Kraftfahrzeug, wie Verschlüsse 51 oder Klappen 51 mittels des dargestellten Komfortantriebs verstellt werden.

Optional weist die Hydraulikschaltung 1 in Figur 2 einen oder mehrere Drucksensoren 84 auf, wie diese in Figur 2 gestrichelt dargestellt sind. Der Drucksensor 84 ist dabei zwischen dem Stelldruckraum 8 und den parallel geschalteten Ventilen 17, 18 in der Stelldruckleitung 10 und/oder zwischen dem Stelldruckraum 6 und den parallel geschalteten Ventilen 15, 16 in der Stelldruckleitung 9 angeordnet. In einer weiteren Ausführung ist ein Drucksensor 84 in der Arbeitsdruckleitung 25 zwischen der Pumpe 19 und den Ventilen 16/18 angeordnet. Dabei wird der Druck im hydraulischen Betätigungssystem 1 erfasst - beispielsweise an der Zylinderausgangsseite des Stellraums 8 - und ein Drucksignal 56 an die Auswerteeinheit 58 weitergeleitet. Die Auswerteeinheit 58 weist einen Druckregler 61 auf, mittels dessen ein Stellsignal 63 generiert wird, mit dem die Proportionalventile 15, 17 angesteuert werden. Die Auswerteeinheit 58 ist beispielsweise in das Steuergerät 37 integriert. In der Auswerteeinheit 58 können hierbei Informationen über die Positionen der Geschwindigkeit der Kolbenstange 4 gewonnen werden, wodurch über die elektrische Ansteuerung der Proportionalventile 15, 17 über den Volumenstrom ein Regelkreislauf geschaffen werden kann. Außerdem kann mittels des Drucksensors 84 gegebenenfalls ein Ausfall der Druckmittelquelle 19 erkannt werden, um die Notwendigkeit eines manuellen Notbetriebs anzuzeigen.

In einer weiteren Variation der Betätigungsvorrichtung 1 ist in der Arbeitsdruckleitung 25 zwischen der Pumpe 19 und der Verzweigung zu den Arbeitsdruckleitungszweigen 26, 27 ein weiteres Rückschlagventil 86 angeordnet. Dieses Rückschlagventil 86 verhindert, dass Druckmittel über die Druckmittelquelle 19, beispielsweise bei Ausfall der Förderpumpe 19, in das Tankvolumen 24 gelangt. Dadurch verharrt das zu verstellende Teil 51, bzw. die Kolbenstange 4 bei Ausfall der Förderpumpe 19 in der augenblicklichen Position. Somit ist auch bei vorhandener Stromversorgung der Ventile 15 -18, bei der sich beispielsweise das Ventil 16 oder 18 in seiner geschalteten "Offenstellung" befindet, bei einem Pumpenausfall die Notverriegelung des zu verstellenden Teils 51 gewährleistet. Zischen der Pumpe 19 - insbesondere zwischen dem Rückschlagventil 86 - und den Ventilen 16, 18 ist einweiteres Druckbegrenzungsventil 73 angeordnet, durch das beim Aufbringen einer manuellen Notbetätigungskraft Druckmittel zum Tankvolumen 24 hin entweichen kann. Durch die erfindungsgemäße hydraulische Betätigungsvorrichtung 1 ist somit für Störfälle durch den Ausfall des elektrischen Versorgungssystems und/oder der Druckmittelquelle 19 eine Sperrung des Betätigungselements 2 und eine anschließende kontrollierte Verstellung im Notbetrieb möglich.

Es sei angemerkt, dass hinsichtlich der in den Figuren und der Beschreibung dargestellten Ausführungsbeispiele vielfältige Kombinationsmöglichkeiten der einzelnen Merkmale untereinander möglich sind. So kann beispielsweise die Kombination der Ventile 64, 68, 72, bzw. 66, 70, 74 eine alternative Ausführung zur Anordnung der Ventilgruppen 82, 76, 78 darstellen. Dabei können die konkrete Ausführung und Anordnung der Rückschlagventile, Druckbegrenzungsventile, manuelle Entsperrventile, aber auch der Steuerventile 15-18 der entsprechenden Anwendung angepasst werden. Beispielsweise kann die Anordnung der Drucksensoren 84 und der Wegsensoren 41 mit jeder Variation der hydraulischen Schaltung kombiniert werden, um die entsprechend dargestellten Ansteuerungen zu realisieren. Das erfindungsgemäße hydraulische Betätigungssystem 1 ist nicht auf die Verstellung eines Cabriolet-Verdecks 51 beschränkt, sondern kann auch für weitere Komfortanwendungen im Kraftfahrzeug, wie die Verstellung von Fahrzeug- /Kofferraumklappen, Ladeböden oder sonstigen beweglichen Teile, genutzt werden.

## Patentansprüche

1. Verfahren zur Bedienung eines elektrohydraulischen Betätigungssystems (1), insbesondere zum Verstellen eines Cabrioletverdecks, mit folgenden Verfahrensschritten:
- ein Volumenstrom wird von einer Druckmittelquelle (19) zu einem hydraulischen Betätigungselement (2) im Normalbetrieb zugeführt,
- beim Ausfall der Druckmittelquelle (19) und/oder der elektrischen Energieversorgung wird das Betätigungselement (2) in seiner momentanen Position gesperrt
- die Sperrung kann im - insbesondere stromlosen - Notbetrieb manuell aufgehoben werden und das Betätigungselement (2) im Notbetrieb manuell verstellt werden.

2. Verfahren nach Anspruch 1, **dadurch gekennzeichnet, dass** die Sperrung im Notbetrieb - insbesondere im stromlosen Zustand - durch eine erhöhte manuelle Verstellkraft überwunden wird.

3. Verfahren nach Anspruch 1 oder 2, **dadurch gekennzeichnet, dass** das Druckmittel im hydraulischen Betätigungssystem (1) manuell mittels eines Entsperrventils (68, 70, 78) in einen drucklosen Zustand versetzt werden kann, und das Betätigungselement (2) im Notbetrieb näherungsweise ohne Gegendruck im Betätigungssystem (1) manuell verstellt werden kann.

4. Verfahren nach einem der vorhergehenden Ansprüche, **dadurch gekennzeichnet, dass** der Gegendruck im Betätigungssystem (1), gegen den die manuelle Verstellkraft im Notbetrieb aufgewendet werden muss, eingestellt werden kann.

5. Hydraulische Betätigungsvorrichtung zur Ausführung des Verfahrens nach einem der vorhergehenden Ansprüche, mit zumindest einem Hydraulikzylinder (2), in dem ein Kolben (3) in einem ersten Stelldruckraum (6) mit einer hydraulischen Kraft beaufschlagbar ist und der Kolben (3) in einem zweiten Stelldruckraum (8) mit einer hydraulischen Kraft beaufschlagbar ist, die der hydraulischen Kraft in dem ersten Stelldruckraum (6) entgegenwirkt, und der erste Stelldruckraum (6) und/oder der zweite Stelldruckraum (8) wahlweise mit einer Druckmittelquelle (19) oder einem Tankvolumen (24) verbindbar sind, **dadurch gekennzeichnet, dass** zwischen dem ersten und/oder zweiten Stelldruckraum (6, 8) und dem Tankvolumen (24) mindestens ein Rückschlagventil (64, 66, 76, 86) derart angeordnet ist, dass beim Ausfall der Druckmittelquelle (19) oder der Energieversorgung während eines Befüllungsvorgangs des ersten oder zweiten Stelldruckraums (6, 8) das Ausströmen des Druckmittels vom zweiten oder ersten Stelldruckraum (8, 6) in das Tankvolumen (24) verhindert wird und **dadurch** der Kolben (3) blockiert.

6. Hydraulische Betätigungsvorrichtung nach einem der vorhergehenden Ansprüche, **dadurch gekennzeichnet, dass** zwischen mindestens einem der Stelldruckräume (6, 8) und dem Tankvolumen (24) mindestens ein Druckbegrenzungsventil (72, 74, 82) angeordnet ist, das mit dem Tankvolumen (24) verbunden ist, um bei einem manuellen Notbetrieb des Kolbens (3), bzw. des Cabrioletverdecks (50) die Blockade des Kolbens (3) mit einer am Druckbegrenzungsventil (72, 74, 82) einstellbaren Kraft manuell zu überwinden.

7. Hydraulische Betätigungsvorrichtung nach einem der vorhergehenden Ansprüche, **dadurch gekennzeichnet, dass** zwischen mindestens einem der Stelldruckräume (6, 8) und dem Tankvolumen (24) jeweils ein manuell betätigbares Entsperrventil (68, 70, 78) angeordnet ist, über das im manuellen Notbetrieb für die Bewegung des Kolbens (3) bei einem Ausfall der Druckmittelquelle (19) das Rückschlagventil (64, 66, 76, 86) und/oder das Druckbegrenzungsventil (72, 74, 82) überbrückt werden, um den Kolben (3) ohne Gegendruck manuell zu verstellen.

8. Hydraulische Betätigungsvorrichtung nach einem der vorhergehenden Ansprüche, **dadurch gekennzeichnet, dass** der erste Stelldruckraum (6) mit dem Tankvolumen (24) über ein erstes Ventil (15) und mit der Druckmittelquelle (19) über ein zweites Ventil (16) verbindbar ist, und dass der zweite Stelldruckraum (8) mit dem Tankvolumen (24) über ein drittes Ventil (17) und mit der Druckmittelquelle (19) über ein viertes Ventil (18) verbindbar ist.

9. Hydraulische Betätigungsvorrichtung nach einem der vorhergehenden Ansprüche, **dadurch gekennzeichnet, dass** in einer Stelldruckleitung (9, 10), zwischen den parallel geschalteten Ventilen (15, 16, bzw. 17, 18) und den Stelldruckräumen (6, 8) jeweils ein Rückschlagventil (64, 66) angeordnet ist, das hydraulisch von der jeweils anderen Stelldruckleitung (10, 9) hydraulisch angesteuert wird, um den Kolben (3) bei einem Ausfall der Druckmittelquelle (19) zu blockieren.

10. Hydraulische Betätigungsvorrichtung nach einem der vorhergehenden Ansprüche, **dadurch gekennzeichnet, dass** zwischen dem ersten und/oder dritten Ventil (15, 17) und dem Tankvolumen (24) jeweils ein federbehaftetes Druckbegrenzungsventil (82) angeordnet ist, über das die Kraft bei einem manuellen Notbetrieb für die Bewegung des Kolbens (3) bei einem Ausfall der Druckmittelquelle (19) einstellbar ist, wobei im Notbetrieb manuell Druckmittel über das erste oder dritte Ventil (15, 17) durch das federbeaufschlagte Druckbegrenzungsventil (82) in das Tankvolumen (24) gepresst wird.

11. Hydraulische Betätigungsvorrichtung nach einem der vorhergehenden Ansprüche, **dadurch gekennzeichnet, dass** zwischen dem ersten und/oder dritten Ventil (15, 17) und dem Tankvolumen (24) jeweils ein Nachsaugventil (77) angeordnet ist, über das im manuellen Notbetrieb für die Bewegung des Kolbens (3) bei einem Ausfall der Druckmittelquelle (19) Druckmittel vom Tankvolumen (24) durch das Nachsaugventil (77) in den Stelldruckraum (6,8) gesaugt wird.

12. Hydraulische Betätigungsvorrichtung nach einem der vorhergehenden Ansprüche, **dadurch gekennzeichnet, dass** das zweite und das vierte Ventil (16, 18) als Schaltventile ausgebildet sind, und das erste und das dritte Ventil (15, 17) als Proportionalventile ausgebildet sind, um den Kolben (3) hydraulisch einzuspannen und das Abströmen des Druckmittels aus dem sich verkleinernden Stelldruckraum (6 bzw. 8) zu verringern.

13. Hydraulische Betätigungsvorrichtung nach einem der vorhergehenden Ansprüche, **dadurch gekennzeichnet, dass** das erste und das dritte Ventil (15, 17) als Schaltventile ausgebildet sind, und das zweite und das vierte Ventil (16, 18) als Proportionalventile ausgebildet sind, um die Bewegungsgeschwindigkeit des Kolbens (3) zu beeinflussen - insbesondere unabhängig von einer Drehzahlsteuerung des Elektromotors (20) der Druckmittelquelle (19).

14. Hydraulische Betätigungsvorrichtung nach einem der vorhergehenden Ansprüche, **dadurch gekennzeichnet, dass** mittels eins Steuergeräts (37) - insbesondere über ein Bussystem - Elektromagneten (32-35) individuell, unabhängig voneinander ein individuell bemessenes Steuerungssignal zugeführt - beispielsweise eine Spannung angelegt wird -, um die Ventile (15-18) zu betätigen, insbesondere den Durchfluss der Proportionalventile zu steuern.

15. Hydraulische Betätigungsvorrichtung nach einem der vorhergehenden Ansprüche, **dadurch gekennzeichnet, dass** mit einem Eingang eines Steuergeräts (37) eine Signalleitung (39) verbunden ist, über die dem Steuergerät (37) ein Signal eines Wegmessers (41) zugeführt ist, der die jeweilige Position einer Kolbenstange (4) des Kolbens (3) erfasst.

16. Hydraulische Betätigungsvorrichtung nach einem der vorhergehenden Ansprüche, **dadurch gekennzeichnet, dass** die Ruheposition des ersten und dritten Ventils (15, 17) einer Schaltposition mit durchströmbarer Verbindung vom Stelldruckraum (6 bzw.8) zum Tankvolumen (24) entspricht, wodurch das Druckniveau der Stelldruckräume (6, 8) bei unbestromten Elektromagneten (32-35) dem Druckniveau des Tankvolumens (24) entspricht, und das zweite und vierte Ventil (16, 18) als Ruheposition eine Schaltposition mit gesperrtem Durchfluss aufweisen.

17. Hydraulische Betätigungsvorrichtung nach einem der vorhergehenden Ansprüche, **dadurch gekennzeichnet, dass** die Ausgänge (80) des ersten und des dritten Ventils (15, 17) miteinander verbunden sind, und über ein gemeinsames Druckbegrenzungsventil (82) mit dem Tankvolumen (24) verbunden sind.
